# EUROPEAN PATENT APPLICATION

(11) **EP 2 550 934 A1**
(43) Date of publication of application: **30.01.2013**
(21) Application number: 11175800.9
(22) Date of filing: 28.07.2011
(51) Int. Cl.: A61C 15/04

(54) **Dental floss comprising plastic parts**

(71) Applicant: The Procter & Gamble Company, Cincinnati, OH 45202 (US)
(72) Inventor: Herzog, Karl, 60489 Frankfurt (DE)
(74) Representative: Joos, Uta Susanne

(57) **Abstract**

A method for producing a length of dental floss having a plastic part attached comprising the steps of providing a mould having a cavity; disposing a length of dental floss within the cavity; arranging the dental floss within the cavity such that the dental floss enters the cavity at a first location X and exits the cavity at a second location y and wherein the path length of the dental floss within the cavity is greater than the linear distance between the first location x and the second location y; and injecting a plastic material into the cavity to encapsulate the floss.

## Description

### FIELD OF THE INVENTION

The present invention relates to dental floss comprising at least one bead attached via injection moulding and methods of producing said dental floss.

### BACKGROUND OF THE INVENTION

Dental floss is a well-known article used to promote oral hygiene by aiding in the removal of particles lodged in the interproxminal areas of the teeth. In interdental spaces, the tooth surfaces are best freed from plaque by means of dental floss. The surface of conventional dental floss is generally smooth and is sometimes waxed. This makes it difficult for an individual to hold the floss during use because it can not be tightly grasped and slips between the user's fingers. The handling of conventional dental floss is thus difficult.

Often floss is purchased and packaged in a container/dispenser having an internal chamber for securely holding a large continuous length of floss wrapped around a spool or bobbin. A length of floss can be drawn and separated from the spooled portion remaining within the container. The floss emerges through a slit on the top of the container and can be separated from the bobbin by a cutting device. For a typical example see USD0339426. To floss the teeth, a person usually wraps the ends of the floss round the forefinger of each hand to be able to impose tension on a short length of the floss to thereby squeeze it between teeth and manipulate it to remove plaque. This can become painful if the floss is wrapped too tightly, or when the floss becomes taut during use. The resulting constriction of the fingers is unpleasant, and the fingers may remain constricted during the cleaning of a complete set of teeth. Furthermore, lack of control of the floss can lead to cutting of the gums. The chances of this happening increase when the floss is moistened by saliva as the friction between a user's fingers and the floss decreases if the surfaces are moistened. The dental floss can then slip.

Accordingly, an object of the invention is the provision of a device that eliminates the need to wrap the floss round the fingers and which allows the user to effectively control the tension of the floss. It is known in the art to provide dental floss having protuberances along its length in order to improve the ability of the user to hold and use the floss. See for example US6112753, US5305768 and US4016892. However, a plastic part, such as a bead, fixed onto floss by injection moulding may slide on the floss, particularly when a traction force is applied between the plastic part and the floss. Sliding can occur easily when the floss passes through the plastic part in a straight line. It is therefore the object of the invention to reduce the sliding of the plastic part on the floss by deflecting the path of the floss within the plastic part, thus increasing the friction forces present and reducing the risk of the plastic part sliding on the floss.

### SUMMARY OF THE INVENTION

The invention relates to a method for producing a length of dental floss having a plastic part attached comprising the steps of providing a mould having a cavity; disposing a length of dental floss within the cavity; arranging the dental floss within the cavity such that the dental floss enters the cavity at a first location x and exits the cavity at a second location y and wherein the path length of the dental floss within the cavity is greater than the linear distance between the first location X and the second location y; and injecting a plastic material into the cavity to encapsulate the floss. The invention further relates to dental floss obtainable by this method.

The invention further relates to dental floss comprising at least one plastic part wherein the dental floss enters the plastic part at a first location x and exits the plastic part at a second location y and wherein the path length of the dental floss within the plastic part is greater than the linear distance between the first location x and the second location y.

### BRIEF DESCRIPTION OF THE DRAWINGS

Figure 1 shows a section in plane B - B of the mould shown in Figure 2
Figure 2 shows a section in plane A - A of the mould shown in Figure 1
Figure 3 shows a section in plane B - B of the mould shown in Figure 2 with a length of dental floss
Figure 4 shows a section in plane B - B of the mould shown in Figure 2 with a length of dental floss in an intermediate position as arranged by the pins
Figure 5 shows a section in plane B - B of the mould shown in Figure 2 with a length of dental floss in a final position as arranged by the pins
Figure 6 shows a section in plane B - B of the mould with the spherical part and floss shown in Figure 7
Figure 7 shows a section in plane A - A of the mould with the spherical part and floss shown in Figure 6
Figure 8 shows a section in plane D - D of the spherical part with floss shown in Figure 8 manufactured in the mould shown in Figures 1 - 7
Figure 9 shows a section in plane C - C of the spherical part with floss shown in Figure 9, manufactured in the mould shown in Figures 1 - 7
Figure 10 shows a section of a mould with spherical part and floss
Figure 11 shows a section of the spherical part with floss, manufactured in the mould shown in Figure 10
Figure 12 shows a section of a mould with floss in the initial position
Figure 13 shows a section of the mould shown in Figure 12 with floss in an intermediate position
Figure 14 shows a section of the mould shown in Figure 12 with floss in an intermediate position
Figure 15 shows a section of the mould shown in Figure 12 with a spherical part and floss in the final position
Figure 16 shows a section of the spherical part with floss, manufactured in the mould shown in Figures 12 - 15
Figure 17 shows a section of a mould with a spherical part and floss
Figure 18 shows a section of the spherical part with floss manufactured in the mould shown in Figure 17
Figure 19 shows a section of a mould with a spherical part and floss
Figure 20 shows a section of the spherical part with floss, manufactured in the mould shown in Figure 19
Figure 21 shows a section of the spherical part with floss shown in Figure 20
Figure 22 shows a section of an alternative spherical part with floss
Figure 23 shows a section of the spherical part of Figure 22 with a filling in the holes

### DETAILED DESCRIPTION OF THE INVENTION

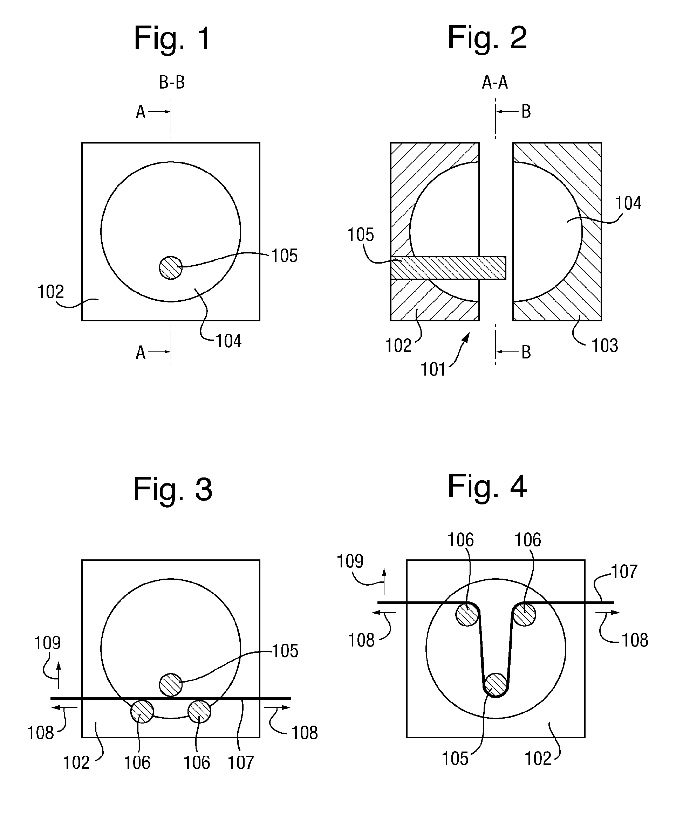

Referring first to Figures 1 to 5, in a first embodiment of the invention, a mould 101 for the injection moulding of a plastic part comprises a first mould half 102, a second mould half 103 and a cavity 104. The first mould half 102 comprises a core 105 within the cavity 104. Preferably, and as illustrated in Figure 1, the core is cylindrical.

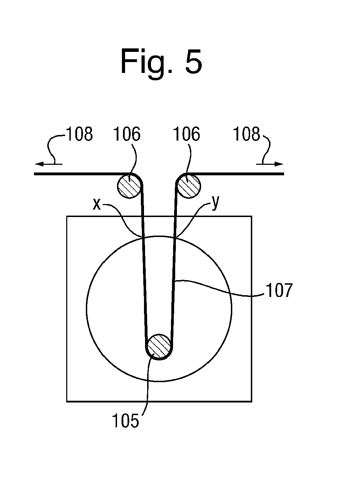

Pins 106 which may capable of movement by mechanical means can be placed over mould half 102. A length of dental floss 107 is laid upon said pins. The length of dental floss can be fed from a spool that rotates around a spindle. Support rollers can guide and support the floss until it is directed to the pins and through the mould. Following injection and cooling, the floss comprising the moulded plastic parts can then be fed onto a second spool by support rollers. The floss is lightly tensioned by forces 108 by support rollers between the two spools. The pins 106 can be moved in a direction 109 by mechanical means. This results in the floss being deflected from a linear path and tensioned around the core 105 as illustrated in Figures 4 and 5. The floss is deflected into a groove within the mould half 102. The second mould half 103 has a corresponding groove. The dental floss enters the cavity at a first location x and exits the cavity at a second location y. Due to the tensioning of the floss around the core 105 by the pins 106, the path length of the dental floss 107 within the cavity 104 is greater than the linear distance between the first location x and the second location y.

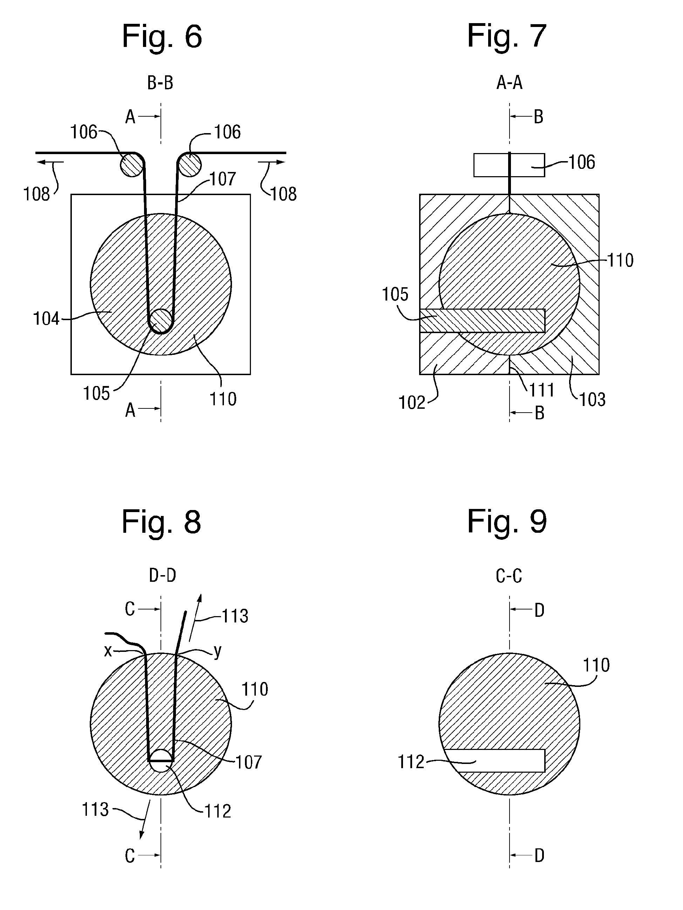

Referring to Figures 6 to 9, continuing the description of the first embodiment of the invention, after closure of the mould, a molten plastic material is injected into the cavity 104 of the mould 101. On cooling, this results in a solid plastic part 110 which can be released by opening the mould. Preferably the plastic part is spherical (as illustrated in Figures 6 to 9) or elliptical. Preferably the plastic part is spherical. This will avoid any sharp edges resulting which may cut the dental floss. The floss can remain tensioned by forces 108 and it lies in a channel 111 resulting from grooves in mould halves 102 and 103. The plastic part is now attached to the floss. The dental floss enters the plastic part at a first location x and exits the plastic part at a second location y such that the path length of the dental floss within the plastic part is greater than the linear distance between the first location x and the second location y. The process can be repeated such that a series of plastic parts are moulded onto a length of dental floss preferably at a distance of from 200 to 400 mm apart. A length of dental floss comprising multiple plastic parts moulded upon it can be packaged into a dispenser such as that described in USD0339426.

The core 105 results in the presence of a hole 112 in the plastic part 110 as illustrated in Figures 8 and 9. Use of the dental floss 107 generates traction forces 113 between the plastic part 110 and the dental floss 107. As a result, the floss crosses through the hole 112. Where the floss makes contact with the edge of the hole 112, friction forces will be present thus reducing the sliding of the plastic part on the floss.

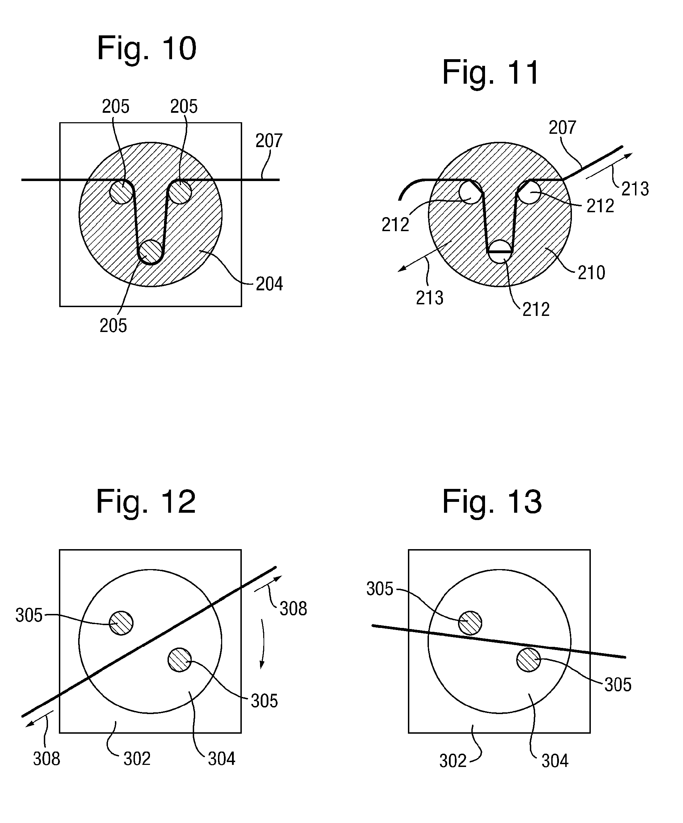

In a second embodiment of the invention the cavity 204 may comprise multiple cores 205 as shown in Figures 10 and 11. This will result in multiple holes 212 in the plastic part 210. Use of the dental floss 207 generates traction forces 213 between the plastic part 210 and the dental floss 207. As a result, the floss crosses through the holes 212. Where the floss makes contact with the edge of the holes 212, friction forces will be present thus reducing the sliding of the plastic part on the floss. Increasing the number of cores will increase the frictional forces present and thus reduce the sliding of the plastic part on the floss.

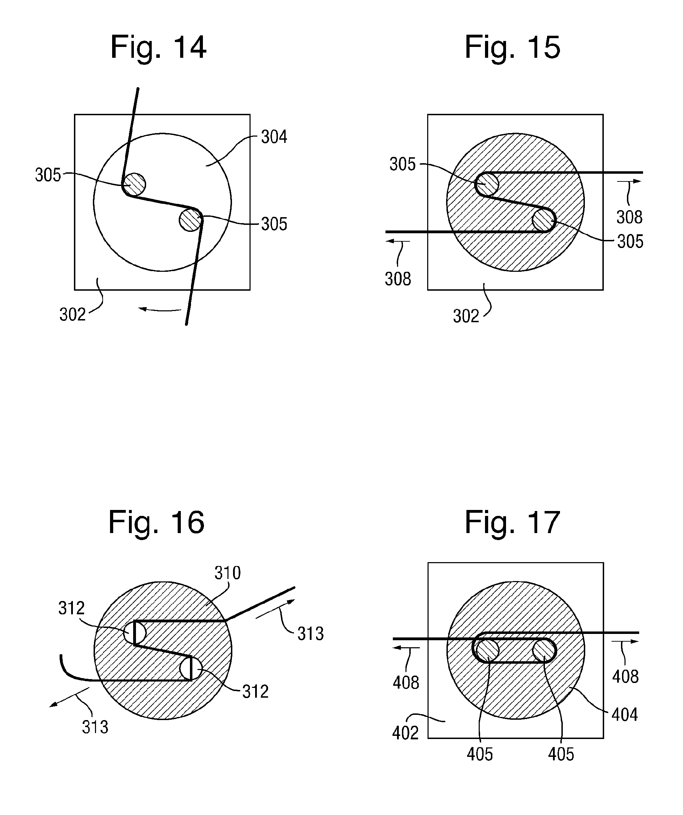

Referring to Figures 12 to 16 and to a third embodiment of the invention, the first mould half 302 comprises two cores 305 within the cavity 304. Prior to injecting the encapsulating plastic material into the mould, the dental floss can be tensioned by forces 308 and manipulated around the cores 305 until the floss is in the position of Figure 15. During use, when traction forces 313 are applied, the dental floss 307 will make multiple points of contact around the open holes 312 thus increasing the frictional forces present and reducing the sliding of the plastic part 310 on the floss.

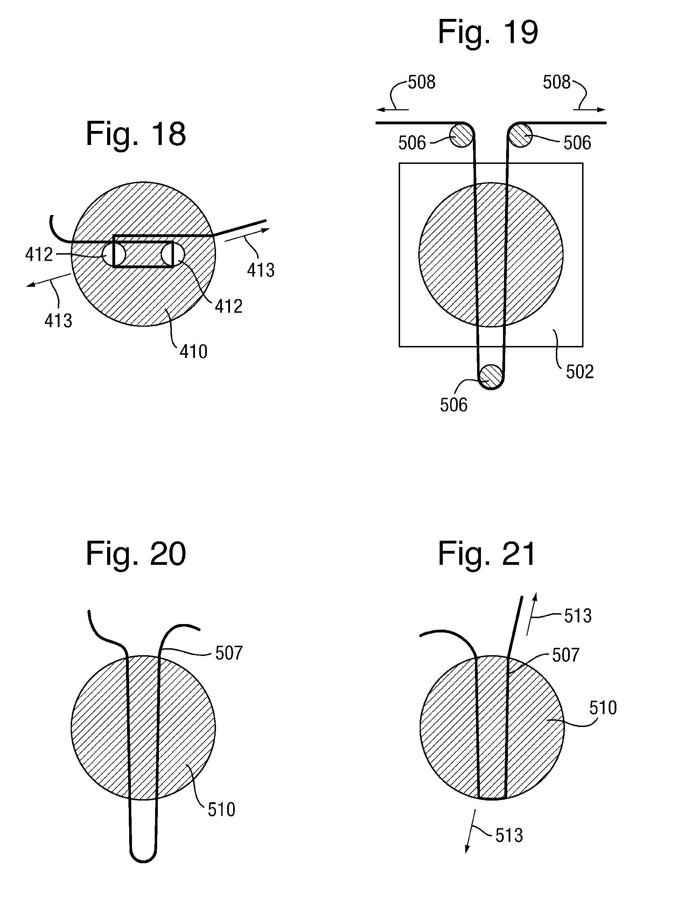

Referring to Figures 17 and 18 and to a fourth embodiment of the invention, the first mould half 402 comprises two cores 405 within the cavity 404. Prior to injecting the plastic material into the mould, the dental floss can be tensioned by forces 408 and manipulated around the cores 405 until the floss is in the position of Figure 17. During use, when traction forces 413 are applied, the dental floss 407 will make multiple points of contact around the open holes 412 thus increasing the frictional forces present and reducing the sliding of the plastic part 410 on the floss.

Referring to Figures 19 to 21 and to a fifth embodiment of the invention, the first mould half 502 does not comprise a core. Instead, three pins 506, placed over the mould half 502, are used to support the floss whilst it is tensioned by forces 508. This will result in a solid plastic part 510 which does not comprise any holes. As such, the plastic part 510 can be smaller than those manufactured utilising a mould comprising a core. When traction forces 513 are applied between the plastic part 510 and the floss 507, the floss will make contact with the edge of the plastic part 510. Friction forces will be present thus reducing the sliding of the plastic part on the floss.

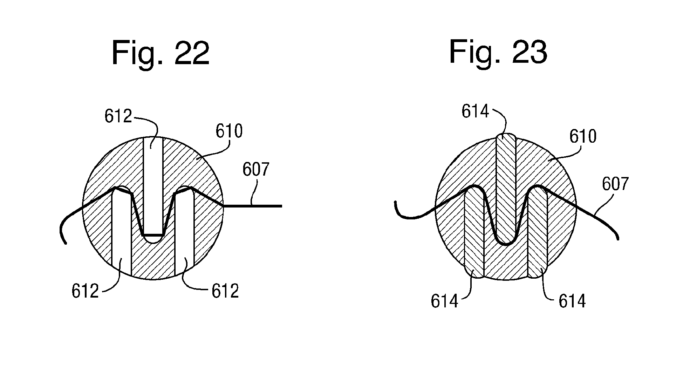

Referring to Figures 22 and 23 and to a sixth embodiment of the invention, the first and second mould halves may comprise multiple cores which the floss 607 is wrapped around, such that after the mould is injected with a plastic material, a plastic part according to Figure 22 is formed. The plastic part 610 will comprise holes 612. These holes may be closed with plastic fillers 614.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

### DESCRIPTION OF REFERENCE NUMERALS

- 101: Mould
- 102, 302, 402, 502: First mould half
- 103: Second mould half
- 104, 204, 304, 404: Cavity
- 105, 205, 305, 405: Core
- 106, 506: Pin
- 107, 207, 307, 407, 507, 607: Length of dental floss
- 108, 308, 408, 508: Tension forces
- 109: Direction
- 110, 210, 310, 410, 510, 610: Plastic Part
- 111: Channel
- 112, 212, 312, 412: Hole
- 113, 213, 313, 413, 513: Traction forces
- 614: Fillers
- x: First location
- y: Second location

## Claims

1. A method for producing a length of dental floss (107, 207, 307, 407, 507, 607) having a plastic part (110, 210, 310, 410, 510, 610) attached comprising the steps of:
(a) providing a mould (101) having a cavity (104, 204, 304, 404);
(b) disposing a length of dental floss within the cavity;
(c) arranging the dental floss within the cavity such that the dental floss enters the cavity at a first location (x) and exits the cavity at a second location (y) and wherein the path length of the dental floss within the cavity is greater than the linear distance between the first location (x) and the second location (y); and
(d) injecting a plastic material into the cavity to encapsulate the floss.

2. A method according to Claim 1 wherein the cavity comprises at least one core (105, 205, 305,405).

3. A method according to Claim 2 wherein the core is cylindrical.

4. A method according to any preceding claim wherein pins (106, 506) are used to arrange the dental floss.

5. Dental floss obtainable by the method of any preceding claim.

6. Dental floss according to Claim 5 wherein the plastic parts are spherical or elliptical.

7. Dental floss comprising at least one plastic part wherein the dental floss enters the plastic part at a first location (x) and exits the plastic part at a second location (y) and wherein the path length of the dental floss within the plastic part is greater than the linear distance between the first location (x) and the second location (y).

8. Dental floss according to Claim 7 wherein the plastic parts are spherical or elliptical.
